# EUROPÄISCHE PATENTSCHRIFT

(11) **EP 1 670 666 B1**
(45) Veröffentlichungstag und Bekanntmachung des Hinweises auf die Patenterteilung: **23.09.2009**
(21) Anmeldenummer: 04725603.7
(22) Anmeldetag: 03.04.2004
(51) Int. Cl.: B60S 1/34

(54) **WISCHERARM, INSBESONDERE FÜR EINE SCHEIBENWISCHVORRICHTUNG EINES KRAFTFAHRZEUGS**
WIPER ARM, IN PARTICULAR FOR A WINDSCREEN-WIPER DEVICE OF A MOTOR VEHICLE
BRAS D'ESSUIE-GLACE, EN PARTICULIER POUR DISPOSITIF ESSUIE-GLACE D'UN VEHICULE AUTOMOBILE

(30) Priorität: 30.09.2003 DE 10345803
(43) Veröffentlichungstag der Anmeldung: 21.06.2006
(73) Patentinhaber: ROBERT BOSCH GMBH, 70442 Stuttgart (DE)
(72) Erfinder: MAHFOUDH, Samir, 77815 Buehl (DE)
(86) Internationale Anmeldenummer: PCT/DE2004/000700
(87) Internationale Veröffentlichungsnummer: WO 2005/042318

(56) Entgegenhaltungen:
- EP-A- 0 017 576
- EP-A- 1 375 273
- WO-A-20/04002788
- DE-A- 10 052 616
- US-A- 2 094 732
- US-A- 4 214 344

## Beschreibung

### Stand der Technik

Die Erfindung betrifft einen Wischerarm, insbesondere für eine Scheibenwischvorrichtung eines Kraftfahrzeugs nach dem Oberbegriff des unabhängigen Anspruchs.

Es sind schon zahlreiche Wischerarme für Scheibenwischvorrichtungen von Kraftfahrzeugen bekannt. Diese umfassen im Wesentlichen ein Befestigungsteil, dass zur Befestigung des Wischerarms an einer Wischerwelle der Scheibenwischvorrichtung dient, sowie ein Gelenkteil, an das ein Wischblatt anlenkbar ist. Im Betrieb der Scheibenwischvorrichtung vermag der Wischerarm in einer Bewegungsebene, die senkrecht zur Drehachse der Wischerwelle angeordnet ist, über die Scheibe des Kraftfahrzeugs zu gleiten. Das Gelenkteil ist im Wesentlichen aus einem u-förmig gebogenen Blechprofil ausgebildet, wobei die Basis des u-förmigen Profils im Wesentlichen parallel zur Bewegungsebene des Wischblatts sowie die Schenkel des u-förmigen Profils senkrecht auf der Bewegungsebene des Wischblattes angeordnet sind. Das Gelenkteil und das Befestigungsteil sind gelenkig miteinander verbunden und zusätzlich durch eine Feder verknüpft. In der Arbeitsposition, wenn das an das freie Ende des Gelenkteils angelenkte Wischblatt auf der Scheibe des Kraftfahrzeugs aufliegt, ist die Feder unter Vorspannung, so dass eine Auflagekraft erzeugt wird, die das Wischblatt auf die Scheibe drückt.

Derartige Wischerarme benötigen sehr viele Teile, wie Federn, Gelenkbolzen, Einhängebolzen etc., wodurch hohe Kosten verursacht werden. Darüber hinaus verursachen derartige Wischerarme durch ihr kastenförmiges, umgekehrt u-förmiges Profil einen sehr hohen Luftwiderstand und ihr robustes Aussehen trägt nicht zur Gefälligkeit des Kraftfahrzeugs bei.

Aus der US-A-2 094 732 ist ein Scheibenwischerarm mit den Merkmalen des Oberbegriffs des Anspruchs 1 bekannt.

### Vorteile der Erfindung

Der erfindungsgemäße Wischerarm mit den Merkmalen des Hauptanspruchs hat den Vorteil, dass das Gelenkteil im Wesentlichen durch zwei Streben gebildet ist, die jeweils zwei Enden aufweisen, wobei das jeweils eine Ende mit dem Befestigungsteil und das jeweils andere Ende mit dem Wischblatt verbindbar ist. Auf diese Weise ergibt sich ein kostengünstiger Wischerarm, der darüber hinaus nur einen geringen Luftwiderstand aufweist und sehr gefällig im Aussehen ist. Des Weiteren ist die Länge der Streben 20 hierbei so gewählt, dass die eine Streben etwas länger ist als die andere, so dass diese entlang der Längserstreckung des Wischerarms 10 bzw. des Befestigungsteil 12 in unterschiedlichen Stellen in das Befestigungsteil 12 münden. Auf diese Weise entsteht ein Klappmechanismus, da die beiden Streben 20 sich somit auf zwei unterschiedlichen Teilkreisbahnen mit unterschiedlichen Radien bewegen, entstehen dadurch zwei stabile Positionen, in denen sich die Bahnen überschneiden und in denen das Gelenkteil 14 bezüglich dem Befestigungsteil 12 in einer relaxierten Position ist.

Durch die in den Unteransprüchen aufgeführten Maßnahmen ergeben sich vorteilhafte Weiterbildungen und Verbesserungen der im Hauptanspruch angegebenen Merkmale.

Sind die beiden Streben durch Schenkel eines im Wesentlichen u-förmigen Bügels von im Wesentlichen länglicher Gestalt gebildet und das Wischblatt an der Basis des u-förmigen Bügels befestigt, so kann das Gelenkteil besonders kostengünstig aus einer einzigen Metall- oder Kunststoffstange gebogen werden.

Besonders vorteilhaft ist, wenn das Gelenkteil in einer zur Bewegungsebene im Wesentlichen senkrechten Klappebene bewegbar ist, da auf diese Weise ein leichter Wechsel des Wischblattes möglich ist.

Hierbei ist es von besonderem Vorteil, wenn das Gelenkteil durch Übervindung einer federartigen Kraft zwischen mindestens zwei Ruhepositionen klappbar ist. Dadurch kann der Wischerarm von der Scheibe abgehoben werden und verharrt, von der Scheibe abgehoben, in einer Ruheposition, so dass ein noch leichterer Wechsel des Wischblatts gewährleistet ist.

Sind die Streben des Wischerarms derart vorgespannt, dass das Wischblatt in der Arbeitsposition, in der sich der Wischerarm während des Betriebs befindet, auf die Scheibe gedrückt wird, so kann auf separate Federn verzichtet werden.

Besonders einfach kann dies dadurch verwirklicht werden, dass die einen, mit dem Befestigungsteil verbundenen Enden der Streben, bezüglich der Bewegungsebene in verschiedenen Höhen in das Befestigungsteil münden.

Ebenso vorteilhaft ist es, wenn die einen Enden der Streben etwa parallel zur Basis nach Innen gebogen sind und in Öffnungen im Befestigungsteil klammerartig eingreifen.

Eine verbesserte Stabilität und Haltbarkeit wird dadurch erzielt, dass die Öffnungen im Befestigungsteil durch Buchsen, insbesondere Stahl- oder Messingbuchsen verstärkt sind.

Insbesondere ist es vorteilhaft wenn das Wischblatt in relaxiertem Zustand senkrecht zur Bewegungsebene eine Biegung aufweist.

### Zeichnungen

Ein Ausführungsbeispiel der Erfindung ist in den Zeichnungen dargestellt und in der nachfolgenden Beschreibung näher erläutert. Es zeigen
Figur 1, einen erfindungsgemäßen Wischerarm in einer Draufsicht,
Figur 2, einen erfindungsgemäßen Wischerarm in einer Teilschnittdarstellung,
Figur 2b, eine schematische Zeichnung zur Mechanik eines erfindungsgemäßen Wischerarms,
Figur 3, ein Befestigungsteil eines erfindungsgemäßen Wischerarms in einer Teilschnittdarstellung,
Figur 4, das Befestigungsteil aus Figur 3 in einer weiteren Teilschnittdarstellung,
Figur 5, das Gelenk-teil eines erfindungsgemäßen Wischerarmes mit einem Wischblatt in einer schematischen Draufsicht und
Figur 6, ein Gelenkteil eines erfindungsgemäßen Wischerarms mit einem Wischblatt in einer Seitenansicht.

### Beschreibung des Ausführungsbeispiels

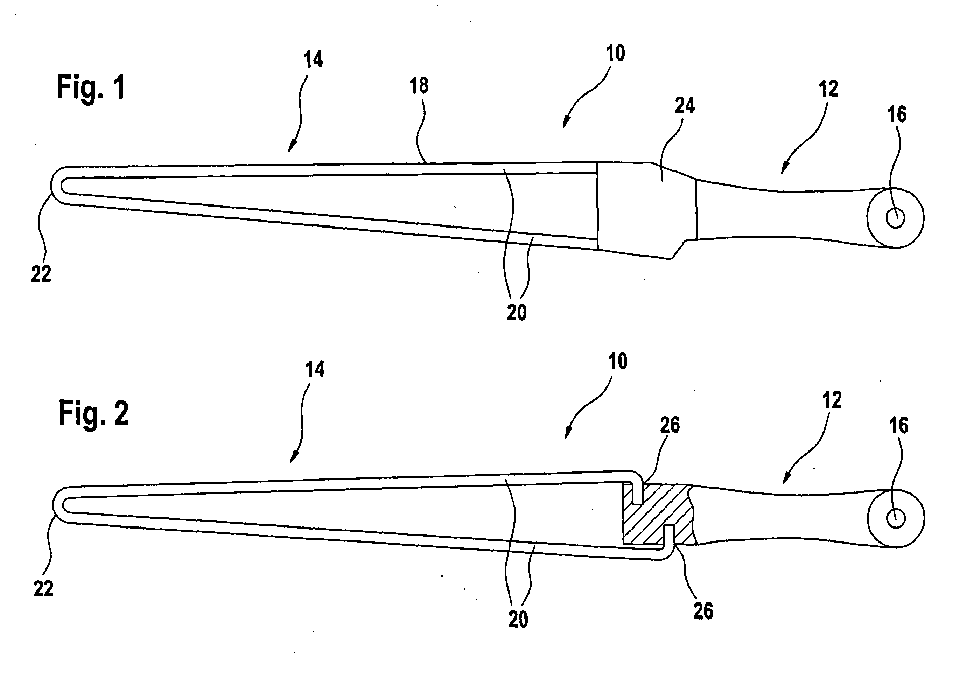

Figur 1 zeigt einen erfindungsgemäßen Wischerarm 10 in einer Draufsicht. Dieser umfasst im Wesentlichen ein Befestigungsteil 12 sowie ein Gelenkteil 14. Das Befestigungsteil 12 ist von im Wesentlichen länglicher Gestalt und weist an einem Ende ein Loch 16 zur Befestigung an einer Wischerwelle auf. Im mittleren Bereich seiner Längserstreckung weist es eine Verjüngung des Querschnitts. Typischerweise ist das Loch 16 in axialer Richtung mehrstufig ausgebildet und beinhaltet eine konische Stufe, so dass ein sicherer Halt des Befestigungsteils 12 an der Wischerwelle der Scheibenwischvorrichtung gewährleistet ist.

An dem, dem Loch 16 abgewandten Ende ist das Gelenkteil 14 angelenkt. Das Gelenkteil 14 ist in seiner Längserstreckung durch einen Bügel 18 gebildet, der von im Wesentlichen u-förmiger Gestalt ist. Die beiden Schenkel des u-förmigen Bügels 18 bilden Streben 20, die durch die Basis 22 des u-förmigen Bügels 18 an dem, dem Befestigungsteil 12 abgewandten Ende des Gelenkteils 14 verbunden sind. Zur Verbesserung der Optik und der aerodynamischen Eigenschaften ist im Bereich der Anlenkung zwischen Befestigungsteil 12 und Gelenkteil 14 noch eine Blende 24 angeordnet, die aus Blech oder Kunststoff ausgebildet ist und auf das Befestigungsteil 12 oder das Gelenkteil 14 aufgeklipst, aufgeklebt oder aufgeprägt ist. Selbstverständlich kann die Blende 24 auch in anderer Weise am Befestigungsteil 12 oder an den Streben 20 des Gelenkteils 14 befestigt sein. Im Betrieb pendelt der Wischerarm um das Loch 16 in dem die Wischerwelle befestigt ist. Durch diese Pendelbewegung wird die Bewegungsebene definiert, in der sich der Wischerarm bzw. das an die Basis 22 des Wischerarms angelenkte Wischblatt 30 bewegen.

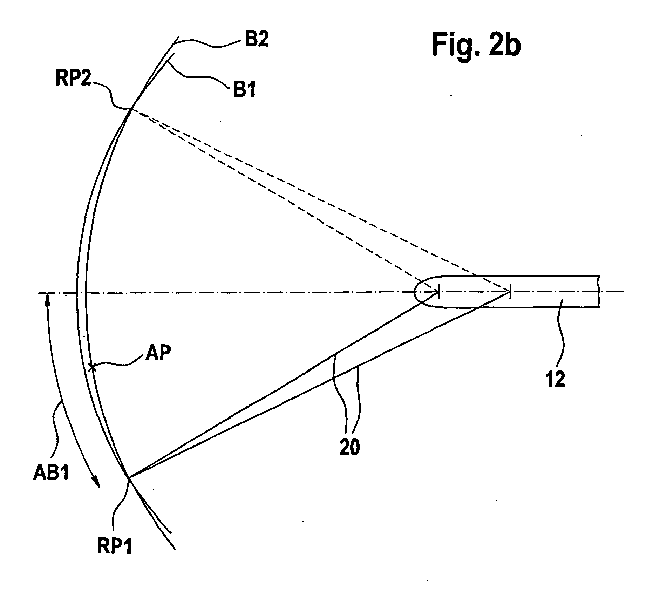

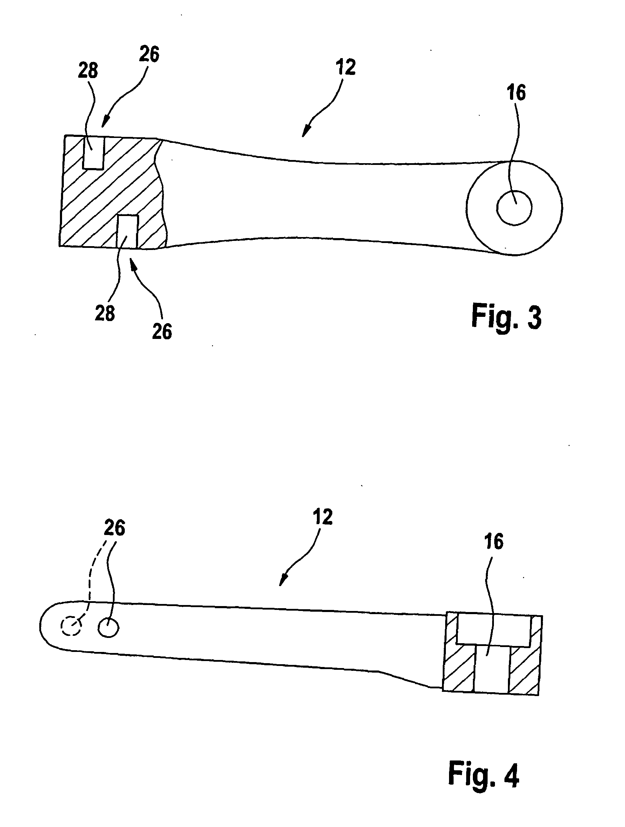

In Figur 2 ist der Wischerarm aus Figur 1 in einer Teilschnittdarstellung gezeigt. Hierbei ist das Befestigungsteil 12 im Bereich der Anlenkung der Streben 20 aufgeschnitten, das Befestigungsteil 12 weist an seinen Seiten zwei Öffnungen 26 auf, die durch Metallbüchsen 28 (Figur 3) verstärkt sind. Die Streben 20 des Gelenkteils 14, bzw. des Bügels 18 sind an ihrem einen, dem Befestigungsteil zugewandten Ende etwa parallel zur Basis nach Innen gebogen, so dass sie in die Öffnungen 26 bzw. in die Metallbüchsen 28 des Befestigungsteil 12 klammerartig eingreifen. Die Streben 20 des Bügels 18 münden daher in das Befestigungsteil.

In einer Weiterbildung umklammert die Blende 24 die Enden der Streben 20 derart, dass diese aus den Bohrungen 26 nicht entweichen können. Weiterhin wird durch die Blende 24 auch eine Abklappbegrenzung erreicht, die den Abklappwinkel des Bügels 18 gegenüber dem Befestigungsteil 12 begrenzt.

Die Streben 20, der Figur 2b, hier nur als Striche dargestellt, sind hier in eine Ebene projiziert und münden entlang der Längserstreckung des Befestigungsteils 12 in zwei verschiedenen Positionen in das Befestigungsteil 12. Die beiden Teilkreisbahnen B1 und B2 entsprechen den jeweilige Radien, den die jeweilige Strebe 20 zu beschreiben versucht. Die relaxierten Ruhepositionen RP1, RP2 des Gelenkteils 14 sind, wie in Figur 2 ersichtlich, genau die jenigen, in denen sich die beiden Radien der beiden Streben 20 überschneiden. In den übrigen Bereichen ist immer eine der Streben 20 elastisch gestaucht bzw. gestreckt, wodurch sich eine federartige Kraft in Richtung der einen oder anderen Ruheposition RP1, RP2 ergibt.

In Figur 3 ist das Befestigungsteil aus Figuren 1 und 2 nochmals in einer Teilschnittdarstellung gezeigt. Das Befestigungsteil 12 ist von im Wesentlichen länglicher Gestalt und an einem Ende mit der Wischerwelle der Scheibenwischvorrichtung durch das Loch 16 verbindbar. Das andere, freie Ende des Befestigungsteils 12 weist zwei Öffnungen 26 auf, die gegenüberliegend angeordnet sind und als Bohrungen ausgeführt sind. Die beiden Öffnungen 26 sind mit Metallbüchsen 28 ausgekleidet, die aus Stahl oder Messing bestehen und ein leichtes Gleiten der Enden der Streben 20 (Figur 2) ermöglichen. Entlang der Längserstreckung des Befestigungsteils 12 sind die beiden Öffnungen 26 versetzt angeordnet. Die Öffnungen 26 erstrecken sich im Wesentlichen senkrecht zum Loch 16 und damit im Wesentlichen senkrecht zur Wischerwelle. Damit sind die Öffnungen 26 axial parallel zur Bewegungsebene des Wischerarms 10.

In Figur 4 ist eine Seitenansicht des Befestigungsteils 12 in einer Teilschnittdarstellung gezeigt. Die beiden Öffnungen 26 sind entlang der Längserstreckung gegenüberliegend und versetzt angeordnet, die Mittelachsen der Öffnungen 26 erstrecken sich senkrecht zu Loch 16 des Befestigungsteils 12. Das Loch 16 ist hier zweistufig ausgebildet und umfasst im Wesentlichen zwei Bohrungen, die koaxial angeordnet sind und unterschiedliche Radien aufweisen.

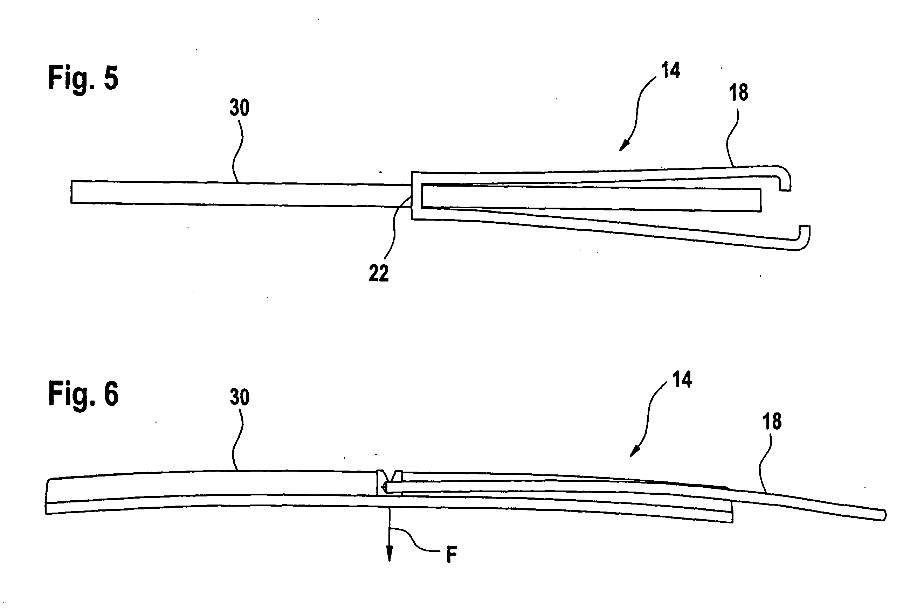

In Figur 5 ist das Befestigungsteil 14 mit dem Bügel 18 eines erfindungsgemäßen Wischerarms zusammen mit einem Wischblatt 30 gezeigt. Das Wischblatt 30 ist hierbei als sogenanntes gelenkfreies Wischblatt 30 ausgebildet, welches kein Tragbügelgestell aufweist. Das Wischblatt 30 ist an der Basis 22 des u-förmigen Bügels 18 befestigt.

In Figur 6 ist das Gelenkteil 14 mit dem Bügel 18 des Wischerarms und einem gelenkfreien Wischblatt 30 in einer Seitenansicht gezeigt. Zur Befestigung des Wischblatts 30 weist dieses eine umgekehrt schlüssellochartige Öffnung auf, so dass das Wischblatt 30 in einfacherweise in die Basis 22 des u-förmigen Bügels 18 eingeklipst werden kann. Der Bügel 18 weist in dieser Seitenansicht darüber hinaus eine leichte Biegung senkrecht zur Bewegungsebene des Wischerarms 10 auf.

Zur Erzeugung einer Auflagekraft F, mit der das Wischblatt 30 auf die Scheibe gedrückt wird, befindet sich das Gelenkteil 14 in einer Arbeitsposition, in der der Bügel 18 und damit die Streben 20 vorgespannt sind. Diese Arbeitsposition liegt zwischen der ersten Ruheposition RP1, die sich im montiertem Zustand typischerweise im Innern des Kraftfahrzeugs, bzw. hinter der Scheibe befindet und einer Achse, die sich aus der Verlängerung der beiden Öffnungen im Befestigungsteil zur Basis hin ergibt (Figur 2b). Im Arbeitsbereich AB1 liegt der Arbeitspunkt AP. An diesem Arbeitspunkt ist die kürzere Strebe 20 etwas gestaucht, bzw. etwas elastisch gebogen, wodurch sich eine Vorspannung ergibt, die die Streben 20 in Richtung der Ruheposition RP1 drückt. Dadurch wirft eine Kraft auf das Wischblatt 30 und drückt dieses auf die Scheibe.

Die Streben 20 bzw. Bügel 18 sind typischerweise aus einem einfachen Rundstahl gebogen. Selbstverständlich können hier auch andere Profile, wie beispielsweise ein Rechteckstahl verwendet werden. In einfacheren Ausführungsformen kann der Bügel 18 auch aus Kunststoff oder einem anderen Material gefertigt sein. Die Basis 22 des Bügels 18 kann, wie in den Figuren 1 und 2 dargestellt, rund, d. h. radiusförmig oder eben (Figur 5) ausgebildet sein. Dies ist nur vom Befestigungsmechanismus abhängig, mit dem das Wischblatt 30 an dem Bügel 18 angelenkt ist. In einer einfachen Form kann die Basis 22 auch als Block ausgebildet sein, in dem die Streben 20 einzeln eingesteckt sind. Die Streben 20 sind dann eben nicht als Bügel miteinander verbunden. Selbstverständlich kann das Wischblatt 30 auch an anderer Stelle zwischen den beiden Streben 20 befestigt sein. Die Basis 22 wird dann durch diese Befestigungsstelle definiert.

Das Befestigungsteil 12 ist aus Kunststoff oder in einem Metallguss oder Druckgussverfahren hergestellt. Selbstverständlich kann das Befestigungsteil 12 aber auch als Stanzbiegeteil aus Blech ausgebildet sein.

## Patentansprüche

1. Wischerarm (10), insbesondere für eine Scheibenwischvorrichtung eines Kraftfahrzeugs, mindestens umfassend:
- ein Befestigungsteil (12) zur Befestigung an einer Wischerwelle der Scheibenwischvorrichtung
- ein Gelenkteil (14), an das ein Wischblatt (30) anlenkbar ist, das beim Betrieb der Scheibenwischvorrichtung in einer Bewegungsebene über eine Scheibe des Kraftfahrzeugs zu gleiten vermag, wobei
- dass das Gelenkteil (14) im wesentlichen durch zwei Streben (20) gebildet ist, die jeweils zwei Enden aufweisen,
- dass das jeweils eine Ende direkt oder indirekt mit dem Befestigungsteil (12) verbunden ist,
- dass das jeweils andere Ende direkt oder indirekt mit dem Wischblatt (30) verbindbar ist.
**dadurch gekennzeichnet,**
- **dass** die Länge der Streben (20) so gewählt ist, dass die eine Strebe (20) etwas länger ist als die andere, so dass diese entlang der Längserstreckung des Wischerarms (10) bzw. des Befestigungsteils (12) in unterschiedlichen Stellen in das Befestigungsteil (12) münden.

2. Wischerarm (10) nach Anspruch 1, **dadurch gekennzeichnet, dass** die beiden Streben (20), durch Schenkel eines im wesentlichen U-förmigen Bügels (18) von im wesentlichen länglicher gestaltet gebildet sind, der eine Basis (22) und die zwei Schenkel umfasst und das Wischblatt (30) direkt oder indirekt mit der Basis (22) verbindbar ist.

3. Wischerarm (10) nach einem der vorhergehenden Ansprüche, **dadurch gekennzeichnet, dass** das Gelenkteil (14) in einer zur Bewegungsebene im wesentlichen senkrechten Klappebene bewegbar ist.

4. Wischerarm (10) nach Anspruch 3, **dadurch gekennzeichnet, dass** das Gelenkteil durch Überwindung einer federartigen Kraft zwischen mindestens zwei Ruhepositionen (RP1, RP2) klappbar ist.

5. Wischerarm (10) nach-einem der vorhergehenden Ansprüche, **dadurch gekennzeichnet, dass** der Wischerarm (10) sich im Betrieb in einer Arbeitsposition (AP) befindet, in der die Streben (20) derart vorgespannt sind, dass das Wischblatt (30) auf die Scheibe gedrückt wird.

6. Wischerarm (10) nach einem der Ansprüche 3 bis 5,**dadurch gekennzeichnet, dass** die einen, mit dem Befestigungteil (12) verbundenen Enden der Streben (20) bzgl. der Bewegungsebene in verschiedenen Höhen, insbesondere in das Befestigungsteil (12) münden.

7. Wischerarm (10) nach einem der Ansprüche 3 bis 6,**dadurch gekennzeichnet, dass** die einen Enden der Streben (20) etwa parallel zur Basis (22) nach innen gebogen sind und in Öffnungen (26) im Befestigungteil (12) klammerartig eingreifen.

8. Wischerarm (10) nach Anspruch 7, **dadurch gekennzeichnet, dass** die Öffnungen (26) im Befestigungteil (12) durch Buchsen (28) verstärkt sind.

9. Wischerarm (10) nach einem des eigenen Ansprüche, **dadurch gekennzeichnet, dass** das Wischblatt (30) in relaxiertern Zustand senkrecht zur Bewegungsebene eine Biegung aufweist.

## Claims

1. Wiper arm (10), in particular for a windscreen wiper device of a motor vehicle, at least comprising:
- a fastening part (12) for fastening to a wiper shaft of the windscreen wiper device,
- an articulated part (14) to which a wiper blade (30) can be coupled, said wiper blade being able to slide in a plane of movement over a window of the motor vehicle during the operation of the windscreen wiper device, wherein
- the articulated part (14) is substantially formed by two struts (20), both of which have two ends,
- one end in each case is connected directly or indirectly to the fastening part (12), and
- the other end can be connected directly or indirectly to the wiper blade (30),
**characterized**
- **in that** the length of the struts (20) is selected in such a manner that one strut (20) is somewhat longer than the other, and therefore said struts lead into the fastening part (12) at different points along the longitudinal extent of the wiper arm (10) and of the fastening part (12).

2. Wiper arm (10) according to Claim 1, **characterized in that** the two struts (20) are formed limbs of a substantially U-shaped bow (18) of substantially elongate design, said bow comprising a base (22) and the two limbs, and the wiper blade (30) can be connected directly or indirectly to the base (22).

3. Wiper arm (10) according to one of the preceding claims, **characterized in that** the articulated part (14) can be moved in a folding plane substantially perpendicular to the plane of movement.

4. Wiper arm (10) according to Claim 3, **characterized in that** the articulated part can be folded between at least two inoperative positions (RP1, RP2) by overcoming a spring-like force.

5. Wiper arm (10) according to one of the preceding claims, **characterized in that**, during operation, the wiper arm (10) is in a working position (AP) in which the struts (20) are pre-tensioned in such a manner that the wiper blade (30) is pressed onto the window.

6. Wiper arm (10) according to one of Claims 3 to 5, **characterized in that** the struts (20), at the ends connected to the fastening part (12), lead in particular into the fastening part (12) at different heights with respect to the plane of movement.

7. Wiper arm (10) according to one of Claims 3 to 6, **characterized in that** the struts (20), at one end, are bent inwards approximately parallel to the base (22) and engage in the manner of clips in openings (26) in the fastening part (12).

8. Wiper arm (10) according to Claim 7, **characterized in that** the openings (26) in the fastening part (12) are reinforced by bushes (28).

9. Wiper arm (10) according to one of the preceding claims, **characterized in that**, in the relaxed state, the wiper blade (30) has a bend perpendicular to the plane of movement.

## Revendications

1. Bras d'essuie-glace (10), en particulier pour un dispositif d'essuie-glace d'un véhicule automobile, comprenant au moins :
- une partie de fixation (12) pour la fixation à un arbre d'essuie-glace du dispositif d'essuie-glace,
- une partie d'articulation (14) à laquelle peut être articulée un balai d'essuie-glace (30), qui, lors du fonctionnement du dispositif d'essuie-glace dans un plan de déplacement, peut glisser sur une vitre du véhicule automobile,
- la partie d'articulation (14) étant formée essentiellement par deux montants (20) qui présentent chacun deux extrémités,
- une extrémité respective étant connectée directement ou indirectement à la partie de fixation (12),
- l'autre extrémité respective pouvant être connectée directement ou indirectement au balai d'essuie-glace (30),
**caractérisé en ce que**
- la longueur des montants (20) est choisie de telle sorte qu'un montant (20) soit un peu plus long que l'autre, de sorte que ceux-ci débouchent le long de l'étendue longitudinale du bras d'essuie-glace (10) ou de la partie de fixation (12) dans différents endroits dans la partie de fixation (12).

2. Bras d'essuie-glace (10) selon la revendication 1, **caractérisé en ce que** les deux montants (20) sont formés par des branches d'un arceau (18) essentiellement en forme de U de configuration essentiellement allongée, qui comprend une base (22) et les deux branches, et **en ce que** le balai d'essuie-glace (30) peut être connecté directement ou indirectement à la base (22).

3. Bras d'essuie-glace (10) selon l'une quelconque des revendications précédentes, **caractérisé en ce que** la partie d'articulation (14) peut être déplacée dans un plan de déplacement dans le plan de rabattement essentiellement vertical.

4. Bras d'essuie-glace (10) selon la revendication 3, **caractérisé en ce que** la partie d'articulation peut être rabattue entre au moins deux positions de repos (RP1, RP2) en surmontant une force de type ressort.

5. Bras d'essuie-glace (10) selon l'une quelconque des revendications précédentes, **caractérisé en ce que** le bras d'essuie-glace (10) se trouve pendant le fonctionnement dans une position de travail (AP) dans laquelle les montants (20) sont précontraints de telle sorte que le balai d'essuie-glace (30) soit pressé contre la vitre.

6. Bras d'essuie-glace (10) selon l'une quelconque des revendications 3 à 5, **caractérisé en ce que** les premières extrémités des montants (20) connectées à la partie de fixation (12) débouchent, par rapport au plan de déplacement à différentes hauteurs, notamment dans la partie de fixation (12).

7. Bras d'essuie-glace (10) selon l'une quelconque des revendications 3 à 6, **caractérisé en ce que** les premières extrémités des montants (20) sont cintrées vers l'intérieur approximativement parallèlement à la base (22) et viennent en prise comme des pinces dans des ouvertures (26) dans la partie de fixation (12).

8. Bras d'essuie-glace (10) selon la revendication 7, **caractérisé en ce que** les ouvertures (26) dans la partie de fixation (12) sont renforcées par des douilles (28).

9. Bras d'essuie-glace (10) selon l'une quelconque des revendications précédentes, **caractérisé en ce que** le balai d'essuie-glace (30) présente, dans l'état détendu, une flexion perpendiculairement au plan de déplacement.
